# EUROPEAN PATENT SPECIFICATION

(11) **EP 2 484 466 B1**
(45) Date of publication and mention of the grant of the patent: **04.11.2020**
(21) Application number: 10820354.8
(22) Date of filing: 14.09.2010
(51) Int. Cl.: B23B 13/02, B23B 13/12

(54) **STOCK FEEDING APPARATUS**
ROHSTOFFZUFUHRVORRICHTUNG
APPAREIL D'ALIMENTATION EN MATIÈRE

(30) Priority: 01.10.2009 JP 2009229280
(43) Date of publication of application: 08.08.2012
(73) Proprietor: Citizen Watch Co., Ltd., Tokyo 188-8511 (JP); Citizen Machinery Co., Ltd., Nagano 389-0206 (JP)
(72) Inventor: NAKAYA, Takaichi, Kitasaku-gun Nagano 389-0206 (JP); YANAGIDAIRA, Shigeo, Kitasaku-gun Nagano 389-0206 (JP); YABE, Koichi, Kitasaku-gun Nagano 389-0206 (JP)
(74) Representative: Puschmann Borchert Kaiser Klettner Patentanwälte Partnerschaft mbB
(86) International application number: PCT/JP2010/065844
(87) International publication number: WO 2011/040235

(56) References cited:
- JP-A- 7 328 803
- JP-A- H0 970 703
- JP-A- 2007 118 163
- JP-U- 3 134 196
- JP-U- 53 076 283
- JP-U- 59 017 101
- JP-U- S59 156 705
- US-A- 2 833 545

## Description

The present invention relates to a processing system according to the preamble of claim 1.

Hitherto, it has been a widely used technology to supply works by pushing into a hollow spindle having a chuck at a front extremity from a rear extremity thereof and a work supplying apparatus therefor is also known.

For instance, there has been known a work supplying apparatus for supplying lengthy works by pushing into a hollow spindle from a rear extremity by a bar feeder having a feed rod having a finger chuck for holding the works at a front extremity thereof in order to sequentially feed the works to machine tools such as an automatic lathe, see Japanese Utility Model Application Laid-open No. S59-156705, page 1, Fig. 1. A similar work supplying apparatus is also disclosed in US 2 833 545 A.

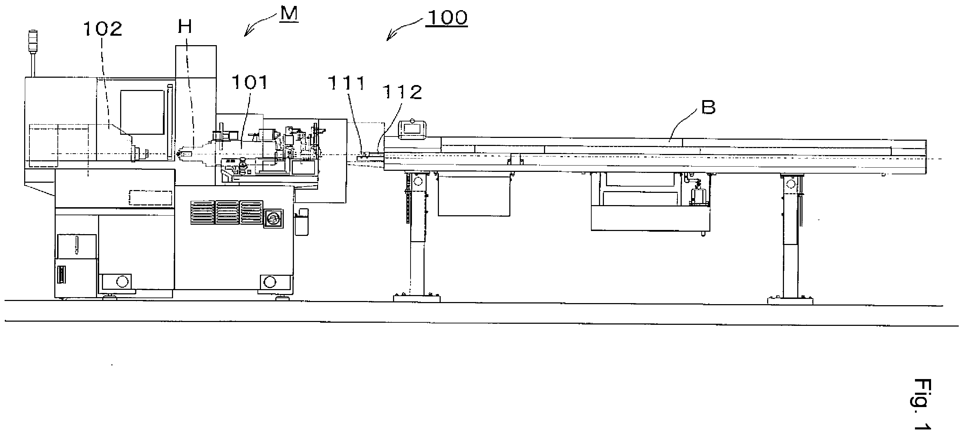

There has been also known a work supplying apparatus for supplying short works that are to be individually processed by supplying the works from a rear extremity of a hollow spindle and by pushing the works by a work pushing means, see Japanese Utility Model Application Laid-open No. S62-7301, Page 1, Fig. 1.

However, the former work supplying apparatus has a problem that it is not easy to supply short works to the automatic lathe because it does not suppose the short works.

The latter work supplying apparatus also has a problem that because it just pushes in the works and its smooth supply may become difficult depending on shape, size and others of the works.

According to the invention, a processing system is provided having the features defined in claim 1.

According to an optional aspect of the invention, the work supplying means has a positioning means for positioning the holding means in holding the work.

According to a further optional aspect of the invention, the work moving means is provided movably to an operative position for moving the work to the holding means and to a receding position for permitting the work pushing means to supply the work to the spindle.

Further advantages, features and potential applications of the present invention may be gathered from the description which follows, in conjunction with the embodiments illustrated in the drawings. Throughout the description, the claims and the drawings, those terms and associated reference signs will be used as are notable from the enclosed list of reference signs. In the drawings
- Fig. 1: is a side view of an automatic processing system having a work supplying apparatus of the invention;
- Fig. 2: is a plan view of the automatic processing system having the work supplying apparatus of the invention;
- Fig. 3: is a plan view of an initial position of the work supplying apparatus of the invention;
- Fig. 4: is a plan view in starting an operation for holding a work in a finger chuck of the work supplying apparatus of the invention;
- Fig. 5: is a plan view in operating a pusher of the work supplying apparatus of the invention;
- Fig. 6: is a plan view after holding the work by the finger chuck of the work supplying apparatus of the invention;
- Fig. 7: is a plan view in starting to push the work of the work supplying apparatus of the invention;
- Fig. 8: is a plan view in pushing the work of the work supplying apparatus of the invention, and

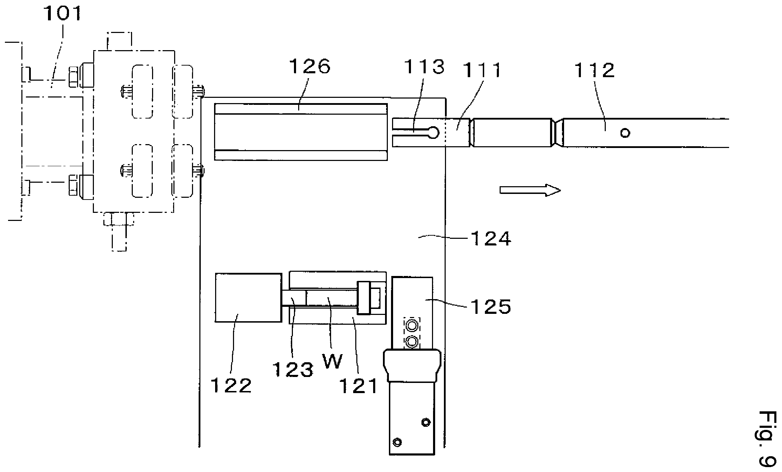

- Fig. 9: is a plan view after completing to push in the work of the work supplying apparatus of the invention.

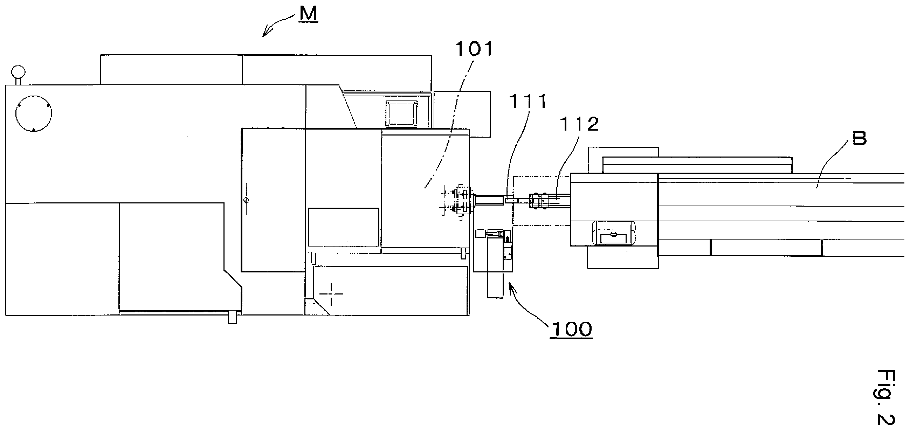

FIGs. 1 and 2 show a processing system comprising a work supplying apparatus 100 of an embodiment of the invention. The processing system is arranged by disposing the work supplying apparatus 100 between an automatic lathe M and a bar feeder B.

The automatic lathe M is a known automatic lathe and has a rotatable and drivable hollow spindle 101. A chuck H is provided at a front extremity of the spindle 101 to machine a work griped by the chuck H by a processing tool.

The bar feeder B is a known bar feeder through which a lengthy rod member is stored within its body and has a feed rod 112 slidable in an axial direction of the spindle 101 of the automatic lathe M. The bar feeder B and the automatic lathe M are disposed so that the feed rod 112 and the spindle 101 are positioned on the same axial line.

A finger chuck 111 for holding a rear extremity of a rod member is attached at a front extremity of the feed rod 112 to compose a holding means for holding the work by the finger chuck 111. The feed rod 112 is movable between a position separated from the spindle 101 behind a rear extremity of the spindle 101 and a position within the spindle 101.

The bar feeder B is arranged to push and supply the selected rod member into the spindle 101 from the rear extremity of the spindle 101 by moving the feed rod 112 in the axial direction of the spindle 101 while holding the rear extremity of the rod member by the finger chuck 111.

The processing system inserts and supplies the rod member into the spindle 101 of the automatic lathe M by the bar feeder B from the rear extremity of the spindle 101 as described above so as to be able to process the rod members sequentially by the automatic lathe M.

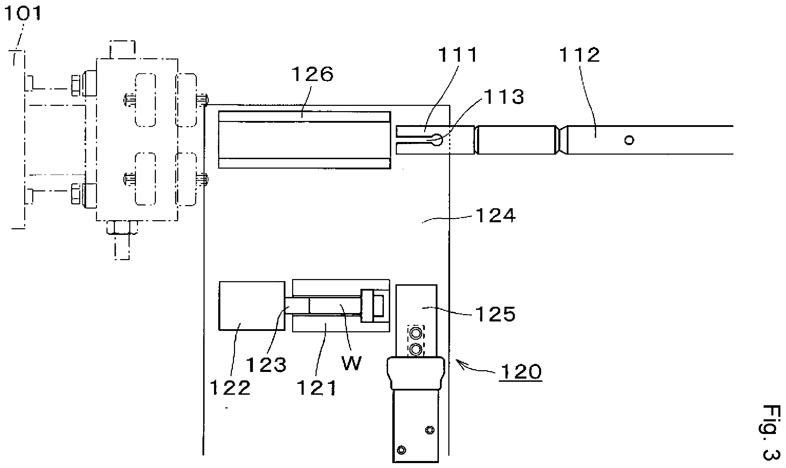

The work supplying apparatus 100 comprises a reciprocating table 124 provided to be movable forward and backward in a horizontal direction orthogonal to an axial line of the spindle 101 as shown in Fig. 3. Provided on the reciprocating table 124 are a work receiver 121, a pusher 122, a finger pressing mechanism 125 and a guide member 126.

The reciprocating table 124 is arranged so as to be able to switch a guiding position in which the guide member 126 is located between the feed rod 112 separated from the spindle 101 and the rear extremity of the spindle 101 and a supplying position in which the work receiver 121 is located therebetween by moving forward and backward as described above.

The guide member 126 extends in the axial direction of the spindle 101 so as to be able to guide the feed rod 112 in a body with the finger chuck 111 along the axial direction of the spindle 101 when the reciprocating table 124 is in the guiding position.

The work receiver 121 accommodates a raw blank, i.e., a work formed into a predetermined shape in advance as a short-length work. The raw blank is positioned by being accommodated in the work receiver 121 and the work receiver 121 composes a positioning means of the raw blank.

It is noted that the raw blank is supplied to the work receiver 121 one by one by a conventionally known parts feeder and the like in the present embodiment.

It is also possible to construct the work receiver 121 by using vacuum adsorption, an openable chuck and the like to position the raw blanks in high precision.

The pusher 122 is composed of a cylinder disposed so as to face the work receiver 121 and pushes the raw blank out of the work receiver 121 by pressing the raw blank within the work receiver 121 by projecting a piston rod 123 from the cylinder. The pusher 122 composes a work moving means for moving the works.

The pusher 122 pushes the raw blank out of the work receiver 121 as described above and move the raw blank toward the finger chuck 111 when the reciprocating table 124 is in the supplying position facing to the finger chuck 111. Thus, the raw blank can be inserted and supplied to the finger chuck 111. It is noted that it is possible to arrange so as to use a chuck for gripping the work as a work moving means and so as to move the chuck gripping the work relatively with the finger chuck 111.

The finger pressing mechanism 125 is disposed on the opposite from the pusher 122 across the work receiver 121 and positions the finger chuck 111 by pinching and the like when the reciprocating table 124 is in the supplying position. Thus, the finger pressing mechanism 125 composes a positioning means for positioning the finger chuck 111 in holding the raw blank by the finger chuck 111. However, the finger pressing mechanism 125 may be what fixes the finger chuck 111 by other mechanisms.

It becomes possible to prevent vibration of the finger chuck 111 caused by vibration and other of the feed rod 112 and to stably insert and supply the raw blank into the finger chuck 111 by position the finger chuck 111 by the finger pressing mechanism 125. Thus, the pusher 122, the work receiver 121 and the finger pressing mechanism 125 compose a work supplying means 120 for individually supplying the raw blanks to the finger chuck 111.

After supplying the raw blank to the finger chuck 111, the pusher 122, the work receiver 121 and the finger pressing mechanism 125 recede from the position facing to the finger chuck 111 and the guide member 126 faces to the finger chuck 111 by setting the reciprocating table 124 in the guide position, so that it becomes possible to push and supply the raw blank from the rear extremity of the spindle 101 to the spindle 101 by moving the feed rod 112 along the axial direction of the spindle 101 while guiding integrally with the finger chuck 111 by the guide member 126.

The automatic lathe M can process the raw blank pushed and supplied into the spindle 101 as described above by the tool while gripping the raw blank by the chuck H.

It is noted that the feed rod 112 is pulled out of the spindle 101 and is separated from the rear extremity of the spindle 101 after when the chuck H of the spindle 101 grips the raw blank.

The pusher 122 is placed on the reciprocating table 124 integrally with the work receiver 121 as described above and moves integrally with the reciprocating table 124 due to the forward/backward operation of the reciprocating table 124. Then, the pusher 122 is located at the operation position of pushing and moving the work to the finger chuck 111 when the reciprocating table 124 is in the supplying position and is located at the receding position where the raw blank can be supplied to the spindle 101 by the feed rod 112 when the reciprocating table 124 is in the guide position.

As described above, the feed rod 112 and the finger chuck 111 of the bar feeder B serve both as a work pushing means of the work supplying apparatus 100 for pushing and supplying the raw blank to the spindle 101 from the rear extremity thereof and a holding means provided at the front extremity of the work pushing means so as to hold the raw blank.

The pusher 122 will not hamper the operation of pushing and inserting the both rod members and raw blanks into the spindle 101 by being moved to the receding position caused by the change of position of the reciprocating table 124 to the guide position, excluding the period of operation for supplying the raw blank to the finger chuck 111.

When the reciprocating table 124 is in the guide position, the guide member 126 guides the feed rod 112 integrally with the finger chuck 111 and does not hamper the supply of the rod member to the spindle 101. That is, the supply of the rod member to the spindle 101 is carried out smoothly and the operation for pushing and inserting the rod member and the raw blank into the spindle 101 can be smoothly carried out as the feed rod 112 (including the finger chuck 111) is guided by the guide member 126. The guide member 126 can also guide the work.

Therefore, the processing system can carry out the operation of supplying the rod member to the spindle 101 by the bar feeder B by setting the reciprocating table 124 in the guide position and the operation of supplying the raw blank to the spindle 101 by the feed rod 112 by utilizing the bar feeder B as it is and while changing the positions of the reciprocating table 124 as described above without changing its configuration at all. With this arrangement, it becomes possible to realize the low-cost and space-saving processing system which requires no other loader such as a gantry loader and which can process rod members and short members such as raw blanks.

In this case, a three-claw chuck and others capable of gripping the both normal rod members and raw blanks can be used for the chuck H of the spindle 101. It is noted that while there is a case when a distance between the automatic lathe M and the bar feeder B is widened by providing the work supplying apparatus 100 between the automatic lathe M and the bar feeder B, lengthy rod members can be smoothly supplied to the spindle 101 because the guide member 126 of the work supplying apparatus 100 is located on the axial line.

Still more, the processing system of the present embodiment can be readily realized by adding the work supplying apparatus 100 to a conventional rod member processing system comprising an automatic lathe and a bar feeder.

Thereby, it becomes unnecessary to prepare processing systems for rod members and for raw blanks separately and becomes possible to process works efficiently.

Still more, it becomes possible to realize a work supplying apparatus capable of supplying the both rod members and raw blanks by adding the work supplying apparatus 100 to a conventional bar feeder.

It is noted that the finger chuck 111 may be commonized for raw blanks and for rod members, beside replacing one to which a raw blank is inserted with one which holds a rod member and attaching to the feed rod 112.

The work receiver 121 may be what can be replaced corresponding raw blanks having different shapes and sizes.

A driving force for projecting and receding the piston rod 123 of the pusher 122 may be generated by any mechanism such as mechanical, electromagnetic, hydraulic mechanisms.

The operation of the work supplying apparatus 100 of the embodiment constructed as described above will be explained below.

At first, as shown in Fig. 3, the reciprocating table 124 is located in the guide position (receding position of the work moving means) in which the guide member 126 is located between the feed rod 112 separated from the spindle 101 and the rear extremity of the spindle 101 and the finger chuck 111 recedes to a position where the finger chuck 111 can receive the work W supplied to the work receiver 121.

The piston rod 123 of the pusher 122 also recedes to the spindle side of the short work W such as the raw blank supplied to the work receiver 121.

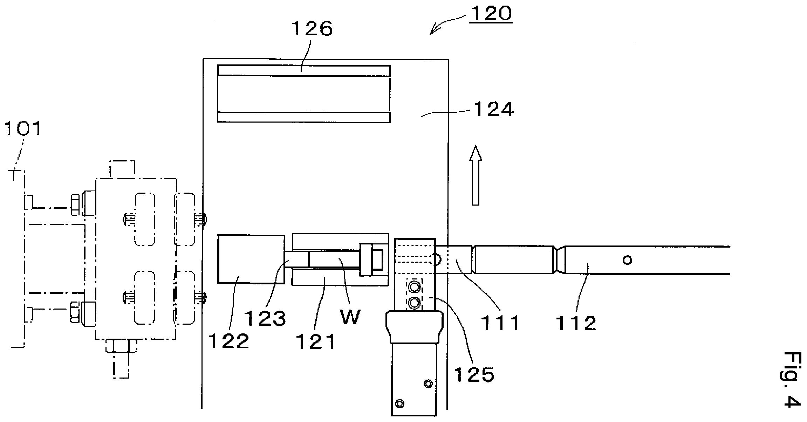

Next, the reciprocating table 124 moves to the supplying position (operating position of the work moving means) where the work receiver 121 is located between the feed rod 112 separated from the spindle 101 and the rear extremity of the spindle 101 as shown in Fig. 4 and the work receiver 121 confronts to the finger chuck 111.

At this time, the finger pressing mechanism 125 operates to position and fix the finger chuck 111.

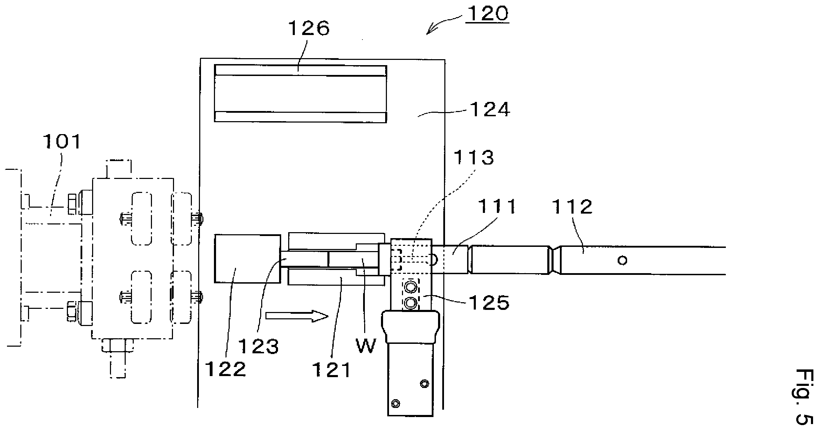

Next, the piston rod 123 of the pusher 122 projects to push the work W in a direction of the finger chuck 111 so as to be held by the finger chuck 111 as shown in Fig. 5.

The finger chuck 111 is provided with a slit 113 from its edge in the present embodiment and the work W is held by elasticity thereof when it is inserted to the edge portion of the finger chuck 111. However, the work may be held by holding means having other configuration such as an air or magnetic adsorption mechanism.

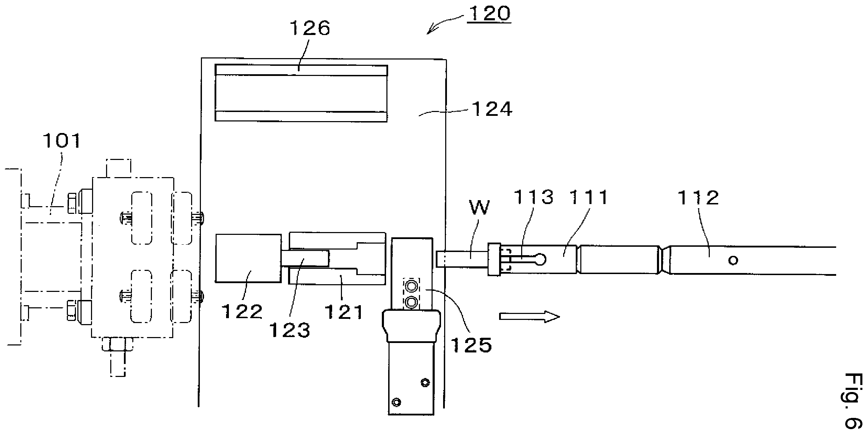

Next, after when the finger pressing mechanism 125 releases the positioning and fixation of the finger chuck 111, the finger chuck 111 holding the work W recedes to position where the work W is completely taken out of the work receiver 121 as shown in Fig. 6.

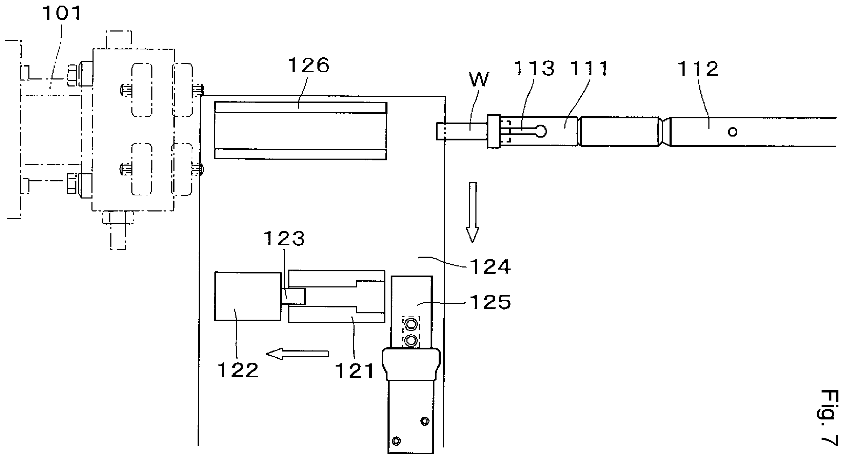

Then, as shown in Fig. 7, the reciprocating table 124 moves to the guide (receding position of the work moving means) described above, and the guide member 126 confronts to the finger chuck 111 holding the work W.

At this time, the piston rod 123 of the pusher 122 also recedes so that the next work W can be supplied to the work receiver 121.

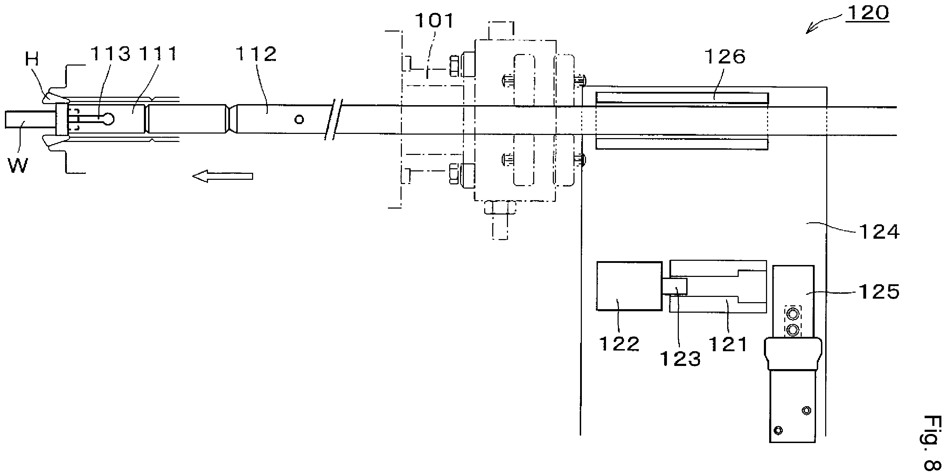

Next, the work W held by the finger chuck 111 passes through the guide member 126 and is pushed to the front extremity of the spindle 101 as shown in Fig. 8.

After when the work W is gripped by the chuck H, the finger chuck 111 completes the supply of the work W and returns to the position where the finger chuck 111 can receive the next work W to be supplied to the work receiver 121.

Then, the next work W is supplied to the work receiver 121. Thus, the series of operations is repeated again and a large number of works W is supplied continuously to the chuck H at the front extremity of the spindle 101.

The operations from the state shown in Fig. 3 to the state shown in Fig. 7, i.e., the operations from when the reciprocating table 124 moves from the position of the guide position to the position (operating position of the work moving means) of the supplying position, the work W is pushed out of the work receiver 121 to be held by the finger chuck 111, the finger chuck 111 recedes and the reciprocating table 124 moves to the position of the guide position (receding position of the work moving means) and until when the guide member 126 confronts to the finger chuck 111 holding the work W, can be carried out in parallel during when the previously supplied work W is processed by being gripped by the chuck H at the front extremity of the spindle 101, so that it becomes possible to shorten a handling time not involved in the processing and to shorten a processing time per each work as a whole. Specifically, the work can be replenished to the work receiver 121 when another work is held by the finger chuck 111 and the reciprocating table 124 is switched to the supplying position, so that the supply of the work W to the finger chuck 111 can be carried smoothly in a short time.

It is also possible to insert the feed rod 112 through the spindle 101 and to cause the next work to stand by within the spindle 101 while processing the work W by the spindle 101 or in passing the work from the spindle 101 to a back spindle. Note that it is desirable to position the work to be processed next right after the chuck H when the work is caused to stand by within the spindle 101.

When a 102 facing to the spindle 101 is provided like the automatic lathe M described above, it is possible to supply the work W by passing the feed rod 112 through the spindle 101 and by causing a chuck of the 102 to grip the work W. When a work requires an inner-diameter chuck in particular, it becomes possible to process the work W by the 102 by attaching the inner-diameter chuck to the 102 and by causing the inner-diameter chuck to grip the work W.

It is noted that the timing of receding of the piston rod 123 of the pusher 122 and of supplying the next work W to the work receiver 121 are not limited to those described above and may be carried out at appropriate timing within the series of operations.

It is also noted that the work supplying apparatus 100 of the invention has been explained by exemplifying the case when it is applied to the automatic lathe M in the embodiment described above, the work supplying apparatus 100 may be used in any processing machines, assembling apparatuses and processing apparatuses as long as the system is what supplies works to a hollow spindle having a chuck at a front extremity thereof by pushing the works from a rear extremity thereof.

### List of reference signs

- 100: work supplying apparatus
- 101: spindle
- 111: finger chuck
- 112: feed rod
- 113: slit
- 120: work supplying means
- 121: work receiver
- 122: pusher
- 123: piston rod
- 124: reciprocating table
- 125: finger presser mechanism
- 126: guide member

- W: work
- M: automatic lathe
- H: chuck
- B: bar feeder

## Claims

1. A processing system comprising an automatic lathe (M) and a bar feeder (B), wherein a lengthy work (W) such as a bar or a lengthy rod member is pushed by the bar feeder (B) having a feed rod (112) having a finger chuck (111) for holding the work at a rear extremity thereof in order to sequentially feed the work (W) to the automatic lathe (M),
**characterised in that** the processing system can also process work (W) in the form of a raw blank, wherein a raw blank is a work formed into a predetermined shape in advance as a short-length work,
wherein the feed rod (112) of the bar feeder (B) also serves as a work pushing means for pushing a work (W) in the form of a raw blank into a hollow spindle (101) of the automatic lathe (M) having a chuck (H) at a front extremity thereof from a rear extremity thereof; wherein the processing system further comprises a work supplying means (120) located between the automatic lathe (M) and the bar feeder (B) for individually supplying the work (W) in the form of a raw blank to the work pushing means;
wherein the work (W) in the form of a raw blank supplied from said work supplying means (120) can be pushed into said spindle (101) by said work pushing means;
wherein said work pushing means is provided with a holding means in the form of the finger chuck (111) of the feed rod (112) for holding the work (W) in the form of a raw blank at a rear edge thereof;
said work supplying means (120) is provided with a work moving means (122) for moving the work (W) in the form of a raw blank so that said holding means holds the work; and the work (W) in the form of a raw blank is supplied to said spindle (101) while being held by said holding means;
wherein the work supplying means (120) comprises a reciprocating table (124) provided to be movable forward and backward in a horizontal direction orthogonal to an axial line of the spindle (101), wherein said reciprocating table (124) is provided with a work receiver (121) for receiving work (W) in the form of a raw blank, a work moving means in the form of a pusher (122) for pushing a work in the form of a raw blank out of the work receiver (121) and into the finger chuck (111), and a guide member (126) for guiding the feed rod (112) along the axial direction of the spindle (101).

2. The processing system according to claim 1, **characterized in that** said work supplying means (120) has a positioning means for positioning said feed rod (112) in holding the work (W) in form of a raw blank.

3. The processing system according to claim 1, **characterized in that** said work moving means is movable to an operative position for moving the work (W) in form of a raw blank into said feed rod (112) and to a receding position, where said feed rod (112) is permitted to supply the work (W) in form of a rod member to said spindle (101).

## Patentansprüche

1. Bearbeitungssystem mit einem Drehautomaten (M) und einem Stangenlader (B), bei dem ein längliches Werkstück (W), beispielsweise eine Stange oder ein längliches Stangenelement, von dem Stangenlader (B) geschoben wird, welcher eine Zuführstange (112) mit einem Fingerfutter (111) zum Halten des Werkstücks an seinem hinteren Ende aufweist, um das Werkstück (W) sequentiell dem Drehautomaten (M) zuzuführen,
**dadurch gekennzeichnet, dass** das Bearbeitungssystem auch in der Lage ist, ein Werkstück (W) in Form eines Rohlings zu bearbeiten, wobei ein Rohling ein Werkstück ist, das im Voraus als kurzes Werkstück in eine vorbestimmte Form gebracht wird,
wobei die Zuführstange (112) des Stangenladers (B) auch als Werkstückschubmittel zum Schieben eines Werkstücks (W) in Form eines Rohlings von dessen hinterem Ende aus in eine Hohlspindel (101) des Drehautomaten (M) dient, der an seinem vorderen Ende ein Futter (H) aufweist;
wobei das Bearbeitungssystem des Weiteren eine Werkstückzufuhrvorrichtung (120) aufweist, die zwischen dem Drehautomaten (M) und dem Stangenlader (B) angeordnet ist, um das Werkstück (W) in Form eines Rohlings einzeln dem Werkstückschubmittel zuzuführen; wobei das Werkstück (W) in Form eines von der Werkstückzufuhrvorrichtung (120) zugeführten Rohlings von dem Werkstückschubmittel in die Spindel (101) geschoben werden kann;
wobei das Werkstückschubmittel mit einer Halteeinrichtung in Form des Fingerfutters (111) der Zuführstange (112) zum Halten des Werkstücks (W) in Form eines Rohlings an dessen hinterem Rand versehen ist;
die Werkstückzufuhrvorrrichtung (120) mit einer Werkstückbewegungseinrichtung (122) zum Bewegen des Werkstücks (W) in Form eines Rohlings versehen ist, so dass die Halteeinrichtung das Werkstück hält; und das Werkstück (W) in Form eines Rohlings der Spindel (101) zugeführt wird, während es von der Halteeinrichtung gehalten wird;
wobei die Werkstückzufuhreinrichtung (120) einen hin und her verfahrbaren Tisch (124) umfasst, welcher derart ausgebildet ist, dass er in horizontaler Richtung orthogonal zu einer Axiallinie der Spindel (101) vor- und rückwärts verfahrbar ist, wobei der hin und her verfahrbare Tisch (124) mit einer Werkstückaufnahme (121) zur Aufnahme eines Werkstücks (W) in Form eines Rohlings, mit einer Werkstückbewegungseinrichtung in Form eines Schiebers (122) zum Schieben eines Werkstücks in Form eines Rohlings aus der Werkstückaufnahme (121) heraus und in das Fingerfutter (111) hinein, und einem Führungselement (126) zum Führen der Zuführstange (112) entlang der axialen Richtung der Spindel (101) versehen ist.

2. Bearbeitungssystem nach Anspruch 1, **dadurch gekennzeichnet, dass** die Werkstückzufuhrvorrichtung (120) eine Positioniereinrichtung zum Positionieren der Zuführstange (112) beim Halten des Werkstücks (W) in Form eines Rohlings aufweist.

3. Bearbeitungssystem nach Anspruch 1, **dadurch gekennzeichnet, dass** die Werkstückbewegungseinrichtung in eine betriebsbereite Position verfahrbar ist, um das Werkstück (W) in Form eines Rohlings in die Zuführstange (112) hinein zu bewegen, und in eine zurückgezogene Position verfahrbar ist, in der es der Zuführstange (112) möglich ist, das Werkstück (W) in Form eines Stangenelements der Spindel (101) zuzuführen.

## Revendications

1. Système de traitement comprenant un tour automatique (M) et un dispositif d'alimentation en barre (B), dans lequel une pièce longue (W) telle qu'une barre ou un élément de tige long, est poussée par le dispositif d'alimentation en barre (B) ayant une tige d'alimentation (112) ayant un mandrin à doigts (111) pour supporter la pièce au niveau de son extrémité arrière afin d'amener séquentiellement la pièce (W) au tour automatique (M),
**caractérisé en ce que** le système de traitement peut également traiter la pièce (W) sous la forme d'une ébauche brute, dans lequel une ébauche brute est une pièce formée dans une forme prédéterminée à l'avance en tant que pièce de petite longueur,
dans lequel la tige d'alimentation (112) du dispositif d'alimentation en barre (B) sert également de moyen de poussée de pièce pour pousser une pièce (W) sous la forme d'une ébauche brute dans une broche creuse (101) du tour automatique (M) ayant un mandrin (H) au niveau de son extrémité avant, à partir de son extrémité arrière ;
dans lequel le système de traitement comprend en outre un moyen d'alimentation en pièce (120) positionné entre le tour automatique (M) et le dispositif d'alimentation en barre (B) pour fournir individuellement la pièce (W) sous la forme d'une ébauche brute au moyen de poussée de pièce ;
dans lequel la pièce (W) se présentant sous la forme d'une ébauche brute fournie à partir dudit moyen d'alimentation en pièce (120), peut être poussée dans ladite broche (101) par ledit moyen de poussée de pièce ;
dans lequel ledit moyen de poussée de pièce est prévu avec un moyen de support se présentant sous la forme du mandrin à doigts (111) de la tige d'alimentation (112) pour maintenir la pièce (W) sous la forme d'une ébauche brute au niveau de son bord arrière ; ledit moyen d'alimentation en pièce (120) est prévu avec un moyen de déplacement de pièce (122) pour déplacer la pièce (W) sous la forme d'une ébauche brute de sorte que ledit moyen de support supporte la pièce ; et la pièce (W) se présentant sous la forme d'une ébauche brute est amenée à ladite broche (101) tout étant maintenue par ledit moyen de support ; dans lequel ledit moyen d'alimentation en pièce (120) comprend une table à mouvement alternatif (124) prévue pour être mobile vers l'avant et vers l'arrière dans une direction horizontale, orthogonale à une ligne axiale de la broche (101), dans lequel ladite table à mouvement alternatif (124) est prévue avec un dispositif de réception de pièce (121) pour recevoir la pièce (W) sous la forme d'une ébauche brute, un moyen de déplacement de pièce se présentant sous la forme d'un poussoir (122) pour pousser une pièce sous la forme d'une ébauche brute hors du dispositif de réception de pièce (121) et dans le mandrin à doigts (111), et un élément de guidage (126) pour guider la tige d'alimentation (112) le long de la direction axiale de la broche (101).

2. Système de traitement selon la revendication 1, **caractérisé en ce que** ledit moyen d'alimentation en pièce (120) a un moyen de positionnement pour positionner ladite tige d'alimentation (112) pour maintenir la pièce (W) sous la forme d'une ébauche brute.

3. Système de traitement selon la revendication 1, **caractérisé en ce que** ledit moyen de déplacement de pièce est mobile dans une position opérationnelle pour déplacer la pièce (W) sous la forme d'une ébauche brute dans ladite tige d'alimentation (112) et dans une position de recul, où ladite tige d'alimentation (112) peut amener la pièce (W) sous la forme d'un élément de tige à ladite broche (101).
